Europäisches Patentamt

European Patent Office

Office européen des brevets

(11) Veröffentlichungsnummer: **0 310 983 B1**

(12) **EUROPÄISCHE PATENTSCHRIFT**

(45) Veröffentlichungstag der Patentschrift: **29.01.92**

(21) Anmeldenummer: **88116297.8**

(22) Anmeldetag: **01.10.88**

(51) Int. Cl.⁵: **G01F 23/00**, //B22D37/00, B22D11/16

(54) **Messung des Füllstandes von Flüssigmetall in permanent mit Flüssigmetall gefüllten Behältern zur Niveauregelung.**

(30) Priorität: **07.10.87 DE 3733897**

(43) Veröffentlichungstag der Anmeldung:
**12.04.89 Patentblatt 89/15**

(45) Bekanntmachung des Hinweises auf die Patenterteilung:
**29.01.92 Patentblatt 92/05**

(84) Benannte Vertragsstaaten:
**CH DE GB LI**

(56) Entgegenhaltungen:
**DE-A- 2 746 634**
**DE-A- 2 851 256**
**US-A- 3 842 894**

**BBC NACHRICHTEN, Jahrgang 66, Heft 7, 1984, Mannheim (DE); G.W. DREES et al.:"Giessspiegelregelung beim Guss von Formstücken", Seiten 258-262**

(73) Patentinhaber: **Asea Brown Boveri Aktiengesellschaft**
**Kallstadter Strasse 1**
**W-6800 Mannheim 31(DE)**

(72) Erfinder: **Hildenbrand, Peter, Prof. Dr.**
**Klein Mättlestrasse 1**
**W-7592 Renchen-Ulm(DE)**

(74) Vertreter: **Rupprecht, Klaus, Dipl.-Ing. et al**
**c/o Asea Brown Boveri Aktiengesellschaft**
**Zentralbereich Patente Postfach 100351**
**W-6800 Mannheim 1(DE)**

Rank Xerox (UK) Business Services

## Beschreibung

Die Erfindung bezieht sich auf ein verfahren zur Messung des Füllstandes von Flüssigmetall in permanent mit Flüssigmetall gefüllten Behältern zur Niveauregelung gemäß dem Oberbegriff des Anspruches 1. Ein derartiges Verfahren ist aus der US-A-38 42 894 bekannt.

Bei modernen Gießeinrichtungen (Teapot) fließt das Flüssigmetall aus einem mit einem Stopfen verschließbaren Ausgußloch in den Einfülltrichter des darunterbefindlichen Formkastens. Die Regelung des Niveaus im Einfülltrichter mit Hilfe einer Videokamera ist bekannt und hat sich in der rauhen Gießereipraxis bewährt. Während des Abgießens ist es notwendig, den Flüssigmetallpegel über dem Ausgußloch im Ausgußsiphon des Vergießofens konstantzuhalten und zwar unabhängig vom jeweiligen Füllinhalt des Kessels. Die gleichmäßige Höhe des Flüssigmetalls im Ausgußsiphon wird über dem Druck im Kessel mit Hilfe von Druckgas eingeregelt.

Bei der Regelung des Flüssigmetallspiegels im Ausgußsiphon eines Vergießofens sind die mit Flüssigmetall gefüllten oder zu füllenden Behälter permanent mit heißem Metall beaufschlagt. Da die Behältnisse längere Zeit mit Flüssigmetall gefüllt sind, erreicht die metall- und temperaturfeste Sintermasse an den mit Flüssigmetall benetzten Zonen die jeweilige Temperatur des Flüssigmetalls. Außerdem bleiben Metallreste am Rand kleben, wenn der Spiegel fällt. Bedingt durch die hohe Temperatur der Sintermasse und durch die Schlakkenreste kann kein scharfer Rand zwischen Flüssigmetall und Behälterwand entstehen, wenn das Niveau fällt. Es ist daher keine exakte Messung möglich. Dieses Problem tritt auch beim Stranggießen auf, da der Eingußtrichter ebenfalls auf die Temperatur des Flüssigmetalls aufgeheizt ist.

Für die Nievauregelung wurden bisher folgende Meßeinrichtungen für den Füllstand verwendet: Mechanische Kontaktstifte, mechanische Schwimmer, radioaktive Sende- und Empfangsvorrichtungen, Apparaturen mit integriertem Laser und Laufzeitmessung von Infrarotlichtimpulsen.

Bei den mechanischen Meßeinrichtungen können die Kontaktstifte und/oder der Schwimmer abbrennen oder sich mit Schlacke zusetzen, so daß ein laufender Austausch notwendig ist. Eine zuverlässige Funktion dieser Meßeinrichtungen ist nicht immer gewährleistet. Radiometrische Meßeinrichtungen sind aus Betriebs- und Sicherheitsgründen problematisch. Bei Meßapparaturen mit integriertem Laser muß mindestens ein Teil der Mechanik direkt über dem Heißbereich angeordnet werden. Dies gilt auch für die Methoden auf der Basis der Laufzeitmessung von Infrarotlichtimpulsen. Die Anordnung direkt über dem Heißbereich führt aufgrund der großen Hitze, der Rauchentwicklung und der auftretenden Spritzeffekte des Flüssigmetalls zu mechanischen Problemen, zu Verschmutzungs- und Kühlproblemen. Außerdem ist das Einjustieren dieser Meßapparaturen schwierig, insbesondere dann, wenn mehrere unterschiedliche Pegelstände (Gießniveau, Bereitschaftsniveau) zuverlässig erkannt werden müssen.

Aus der US-A- 38 42 894 sind automatische Mittel zur Fern-Bild-Abtastung eines Flüssigkeitsspiegels und zur den Flüssigkeitsspiegel aufrecht erhaltenden Zufluß-Regelung bekannt. Dabei wird der Einsatz einer Videokamera zur Abtastung des Flüssigkeitsspiegels von Flüssigmetall vorgeschlagen. Es wird empfohlen, die Empfindlichkeitsschwelle des Videosignals so einzustellen, daß lediglich ausreichend intensive, das flüssige Metall allein anzeigende Signale erzeugt werden. Zur Kontrastverstärkung werden für die Infrarotstrahler sperrende und für die Ultraviolettstrahlung durchlässige Filter eingesetzt.

Aus der DE-A1 28 51 256 ist ein automatisches Metallschmelzenoberflächen-Füllstands-Regelungssystem für Stranggießmaschinen bekannt, bei welchem ebenfalls eine Videokamera vorgesehen ist, wobei Filter vor dem Kameraobjektiv nur Lichtstrahlen eines bestimmten Wellenlängenbereiches durchlassen. Den Bildelementen der Videokamera werden Ausgangssignale zugeordnet, die derart logisch verarbeitbar sind, daß sich hieraus der Höhenstand und die Höhenstandsregelung des Oberflächenspiegels ergeben.

Es ist daher Aufgabe der Erfindung, die bisher bekannten Meßmethoden für die Messung eines Flüssigmetallspiegels in einem auf ähnliche Temperaturen erhitzten Behälter zu verbessern. Es muß daher das flüssige Metall von der auf etwa gleiche Temperatur erhitzten Wand getrennt werden, um Meßsignale für die Anzeige und/oder Regelung zu erhalten.

Gelöst wird die Aufgabe der Erfindung dadurch, daß die Empfindlichkeitsschwelle der Videokamera kontinuierlich und automatisch durch gesteuerte Adaption auf einen Optimalwert zur Erkennung des Unterschiedes zwischen der Flüssigmetallstrahlung und der Nichtflüssigmetallstrahlung nachgestellt wird indem die Videoschwelle intern solange verstellt wird, bis das gesamte Testbild weiß ist, indem die Videoschwelle anschließend solange verstellt wird, bis das Bild schwarz ist und indem als Einstellwert für die Videoschwelle ein Mittelwert der beiden vorhergehenden Einstellwerte ermittelt und über einen Funktionsgeber vorgegeben wird.

Besonders vorteilhaft kann die Videokamera den Ausgußsiphon des Vergießofens überwachen.

Ein anderes vorteilhaftes Anwendungsgebiet findet sich bei der Regelung des Niveaus des Flüssigmetalls in der Gießkokille bei Stranggießanlagen, da hier der Spiegel des Flüssigmetalls immer mit einer Pulverschicht bedeckt ist. Hier kann der Gießstrahl gegenüber der ebenfalls stark erhitzten Pulverschicht dadurch erfaßt werden, daß das Verschwinden des Gießstrahles in dem Pulver als Meßsignal für die Niveauhöhe des Flüssigmetalls in der Gießkokille verwendet wird.

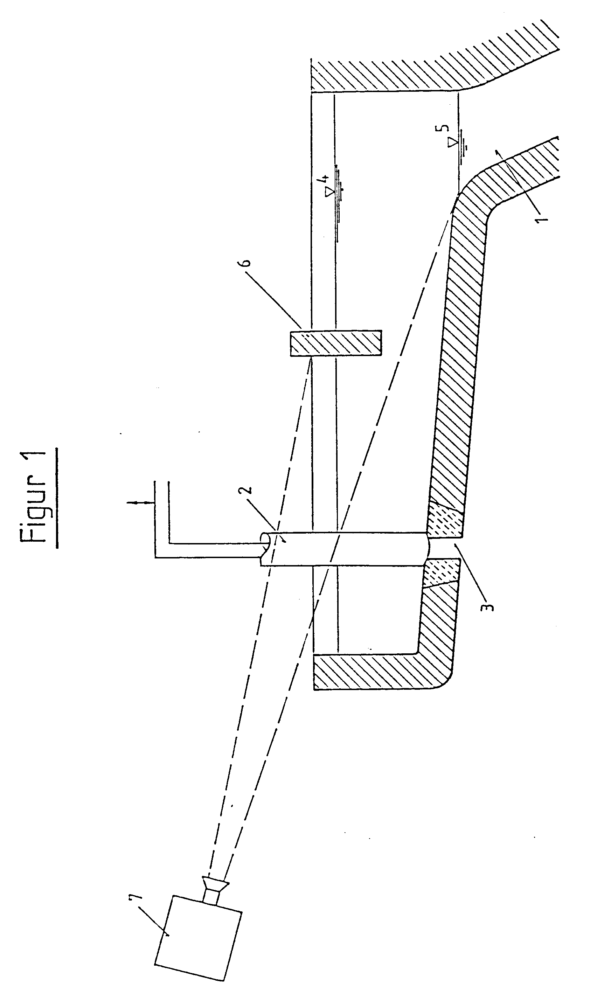

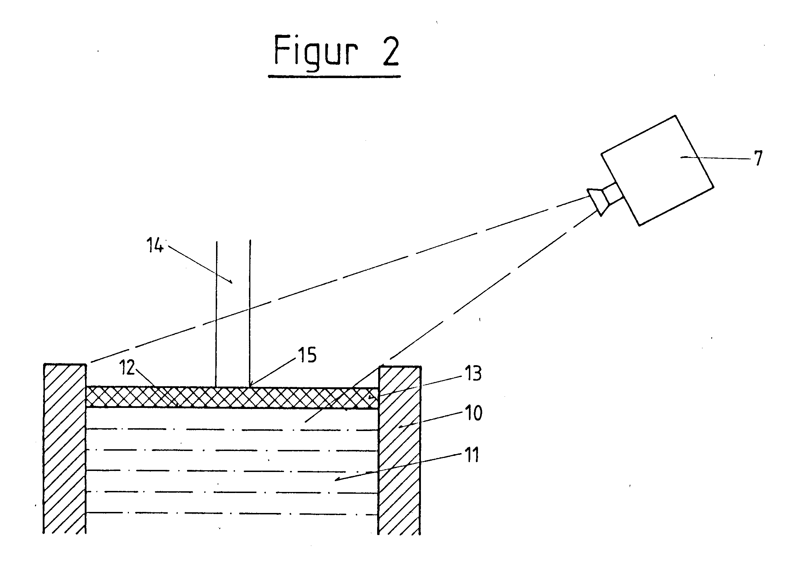

Die Figuren zeigen schematische Ausführungsbeispiele der Erfindung. In Figur 1 ist die Anwendung der Erfindung bei einem Außgußsiphon für Gießmaschinen dargestellt, während Figur 2 die Gießkokille einer Stranggießanlage zeigt.

In Figur 1 ist nur der Ausgußsiphon einer druckgasbetätigten Gießeinrichtung dargestellt. Druckgasbetätigte Gießeinrichtungen sind allgemein bekannt, wir verweisen beispielsweise auf die BBC-Nachrichten, Jahrgang 66, Heft 7/1984, Seite 258 bis 262. In diesem Dokument wird vorgeschlagen, eine Videokamera zur Feststellung des Füllstandes im Gießtrichter einzusetzen. Über ein optoelektronisches Meß- und Sensorsystem wird das Bild punktweise in Hell-Dunkel-Anteile digitalisiert. Der Einfluß der Lichtintensität des Flüssigmetalls spielt dabei keine Rolle, um den Einfluß der Gießtemperatur auszuschalten. Der Gießstrahl vom Ausgußloch des Gießofens in den Trichter wird elektronisch ausgeblendet.

Der Ausgußsiphon besitzt einen aufsteigenden Kanal 1 für das Flüssigmetall. Oben verbreitert sich der aufsteigende Kanal zu der Ausgußeinrichtung, die einen Stopfen 2 enthält zum Öffnen und Schließen der Gußöffnung 3. Während des Abgießens soll das Flüssigmetall die gestrichelt angedeutete Niveauhöhe 4, das sogenannte Gießniveau, konstant einhalten, um gleiche Gießgechwindigkeiten zu erreichen. In Pausen wird der Flüssigmetallspiegel gesenkt bis zur Höhe 5. Weiterhin ist noch eine Sperre 6 vorhanden, um eventuell vorhandene Schlacke von dem Ausguß 3 fernzuhalten. Die Videokamera 7 ist derart angeordnet, daß sie unterhalb der Sperre 6 erkennen kann, ob in dem aufsteigenden Kanal 1 das Bereitschaftsniveau 5 erreicht ist. Weiterhin überwacht sie das Gießniveau 4. Bei Abweichungen, z.B. nach dem Abgießen oder nach Auffüllen mit Flüssigmetall, wird durch entsprechendes Ändern des Gasdruckes innerhalb des Gießofens der Gießniveauspiegel wieder eingeregelt.

Um die Erkennbarkeit der Grenzschicht zwischen Behälterwand und Flüssigeisen zu verbessern, werden die langwelligen Wärmestrahlen durch optische Filter gedämpft. Das Flüssigmetall selbst strahlt eine charakteristische kurzwellige Strahlung aus, die zur Erkennung der Grenzschicht ausgenutzt wird. Der bei längerem Konstanthalten des Flüssigmetallniveaus eintretende Effekt, daß die Behälterwand ebenfalls zu strahlen beginnt, wird durch eine überlagerte Regelung des Pegelsollwertes kompensiert. Zur Erreichung optimaler Meßergebnisse wird laufend die Empfindlichkeitsschwelle der Videokamera automatisch nachgestellt. In den meisten Fällen genügt eine gesteuerte Adaption. Beispielsweise wird die Videoschwelle intern solange verstellt, bis das gesamte Testbild weiß ist; die ausgeleuchtete Fläche ist jetzt maximal. Anschließend im Punkt 2 wird die Videoschwelle solange verstellt, bis das Bild schwarz ist und die ausgeleuchtete Fläche praktisch den Minimalwert haben würde. Als Einstellwert für die Videoschwelle wird ein Mittelwert der beiden vorhergehenden Einstellwerte ermittelt und über einen Funktionsgeber vorgegeben. In Abhängigkeit von dem jeweiligen Flüssigmetall kann der Mittelwert entsprechend verändert werden.

Beim Auftreten von Schlacken wird das Meßbild gestört. Besonders störend tritt die Schlackenbildung auf, wenn diese im Bereich der Trennlinie zwischen Flüssigmetall und Behälterwand liegen. Wenn die Schlacken ausschließlich im Bereich des Flüssigmetalls liegen, können sie leicht ausgeblendet werden. Bei einem durch Schlackenbildung gestörten Bild wird eine fiktive obere Grenze bestimmt, die ein Mittelwert zwischen Maximal- und Minimalwert sein kann oder durch den Maximalwert charaktierisiert wird.

Die Figur 2 zeigt die Verwendung der Videokamera bei einer Gießkokille 10 für Stranggießanlagen. Derartige Stranggießanlagen sind an sich bekannt; wir verweisen beispielsweise auf die BBC-Nachrichten Heft 8/9/1983, Seite 282-bis 292. In der Gießkokille 10 besitzt das Flüssigmetall 11 ein bestimmtes Niveau 12. Das Flüssigmetall 12 ist nach oben mittels einer Pulverschicht 13 abgedeckt, so daß Oxidationen des Flüssigmetalls und anderer schädliche Einflüsse durch die umgebende Luft vermieden werden. Der Gießstrahl 14, der in hier nicht dargestellter Weise von einer Gießeinrichtung der Kokille zugeführt wird, verschwindet im Bereich 15 in die Pulverschicht 13. Dieser Bereich 15 wird ebenfalls von der Videokamera 7 erfaßt und als Meßsignal für die Höhe des Niveaus 12 des Flüssigmetalls verwandt. Dies ist ohne weiteres möglich, da die Höhe der Pulverschicht 13 allgemein bekannt ist.

## Patentansprüche

1. Verfahren zur Messung des Füllstandes von Flüssigmetall in permanent gefüllten Behältern zur Niveauregelung, woei die Oberfläche des Flüssigmetalls mit einer Videokamera erfaßt wird, um den Unterschied zwischen der Flüssigmetallstrahlung und der Nichtflüssigmetallstrahlung zu erkennen und wobei die kurzwellige Strahlung des Flüssigmetalls durchlassende und die langwellige Wärmestrahlung sperrende Filter in den Strahlengang eingeschaltet sind, dadurch gekennzeichnet, daß die Empfindlichkeitsschwelle der Videokamera kontinuierlich und automatisch durch gesteuerte Adaption auf einen Optimalwert zur Erkennung des Unterschiedes zwischen der Flüssigmetallstrahlung gegenüber der Nichtflüssigmetallstrahlung nachgestellt wird, indem die Videoschwelle intern solange verstellt wird, bis das gesamte Testbild weiß ist, indem die Videoschwelle anschließend solange verstellt wird, bis das Bild schwarz ist und indem als Einstellwert für die Videoschwelle ein Mittelwert der beiden vorhergehenden Einstellwerte ermittelt und über einen Funktionsgeber vorgegeben wird.

2. Verfahren zur Füllstandsmessung nach Anspruch 1, dadurch gekennzeichnet, daß zur Überwachung des Füllstandes in dem Ausgußsiphon eines Gießofens die Videokamera den Ausgußsiphon überwacht.

3. Verfahren zur Füllstandsmessung nach Anspruch 2, dadurch gekennzeichnet, daß beim Start des Vergießens das erste Erfassen von Flüssigmetall dem Bereitschaftsniveau entspricht und der erfaßte Wert gespeichert wird.

4. Verfahren zur Füllstandsmessung nach Anspruch 3, dadurch gekennzeichnet, daß der Wert des Bereitschaftsniveaus um einen vorgebbaren bestimmten Wert erhöht wird und das Betriebsnivau beim Abgießen ergibt.

5. Verfahren zur Füllstandsmessung nach einem der Ansprüche 2 bis 4, dadurch gekennzeichnet, daß die Videokamera schräg von oben vor dem Ausgußsiphon angeordnet ist.

6. Verfahren zur Füllstandmessung nach Anspruch 1, dadurch gekennzeichnet, daß zur Überwachung des Füllstandes der Gießkokille einer Stranggießanlage, deren Oberfläche mit Pulver bedeckt ist, der Gießstrahl erfaßt und das Verschwinden des Gießstrahles in dem Pulver als Meßsignal für die Niveauhöhe in der Gießkokille verwendet wird.

## Claims

1. Method of measuring the filling level of liquid metal in permanently filled vessels for level control, the surface of the liquid metal being sensed with a video camera, in order to detect the difference between the liquid metal radiation and non-liquid metal radiation and filters being arranged in the path of rays, allowing through the short-wave radiation of the liquid metal and blocking the long-wave heat radiation, characterised in that the sensitivity threshold of the video camera is corrected continuously and automatically by controlled adaptation to an optimum value for detection of the difference between the liquid metal radiation in distinction from the non-liquid metal radiation, by the video threshold being adjusted internally until the entire test image is white, by the video threshold subsequently being adjusted until the image is black and by determining as setting value for the video threshold an average value of the two previous setting values and specifying the said value by means of a function generator.

2. Method of filling level measurement according to Claim 1, characterised in that, for monitoring the filling level in the discharge syphon of a casting furnace, the video camera monitors the discharge syphon.

3. Method of filling level measurement according to Claim 2, characterised in that, at the start of pouring, the first sensing of liquid metal corresponds to the readiness level and the sensed value is stored.

4. Method of filling level measurement according to Claim 3, characterised in that the value of the readiness level is increased by a predeterminable specific value and gives the operating level in pouring-off.

5. Method of filling level measurement according to one of Claims 2 to 4, characterised in that the video camera is arranged at an angle above and in front of the discharge syphon.

6. Method of filling level measurement according to Claim 1, characterised in that, for monitoring the filling level of the casting mould of a continuous casting installation, the surface of which mould is covered with powder, the casting stream is sensed and the disappearance of the casting stream in the powder is used as a measuring signal for the height of the level in the casting mould.

## Revendications

1. Procédé pour la mesure du niveau de remplissage en métal liquide dans des récipients remplis de manière permanente afin de régler le niveau, la surface du métal liquide étant surveillée au moyen d'une caméra vidéo pour déterminer la différence entre le rayonnement du métal liquide et le rayonnement du métal non liquide et des filtres qui laissent passer le rayonnement de faible longueur d'onde du métal liquide et arrêtent le rayonnement thermique de grande longueur étant placés sur le parcours du rayonnement, caractérisé par le fait qu'on ajuste en continu et de manière automatique, par réglage commandé le seuil de sensibilité de la caméra vidéo à une valeur optimale pour la détection de la différence entre le rayonnement du métal liquide et le rayonnement du métal non liquide, en réglant en interne le seuil vidéo jusqu'à ce qu'on obtienne une image test entièrement blanche, en réglant ensuite le seuil vidéo jusqu'à ce qu'on obtienne une image noire et en déterminant comme valeur de réglage pour le seuil vidéo une valeur moyenne à partir des deux valeurs de réglage précédentes.

2. Procédé pour la mesure du niveau de remplissage selon la revendication 1, caractérisé par le fait que, pour la surveillance du niveau de remplissage dans le siphon de coulée d'un four de coulée, la caméra surveille le siphon de coulée.

3. Procédé pour la mesure du niveau de remplissage selon la revendication 2, caractérisé par le fait qu'au début de la coulée, la première détection du métal liquide correspond au niveau en attente et la valeur mesurée est mise en mémoire.

4. Procédé pour la mesure du niveau de remplissage selon la revendication 3, caractérisé en ce qu'on augmente la valeur correspondant au niveau en attente d'une valeur donnée prédéterminée et on obtient ainsi le niveau de fonctionnement lors de la coulée.

5. Procédé pour la mesure du niveau de remplissage selon l'une des revendications 2 à 4, caractérisé en ce que la caméra vidéo est inclinée et est disposée devant le siphon de coulée, au-dessus de celui-ci.

6. Procédé pour la mesure du niveau de remplissage selon la revendication 1, caractérisé en ce que, pour la surveillance du niveau de remplissage de la coquille de coulée d'une installation de coulée continue, on recouvre sa surface de poudre, on détecte le jet de coulée et on utilise la disparition du jet de coulée dans la poudre comme signal de mesure pour la hauteur du niveau dans la coquille de coulée.

# Figur 1

EP 0 310 983 B1

# Figur 2

EP 0 310 983 B1